# EUROPÄISCHE PATENTSCHRIFT

(11) **EP 0 589 076 B1**
(45) Veröffentlichungstag und Bekanntmachung des Hinweises auf die Patenterteilung: **03.01.1996**
(21) Anmeldenummer: 92116198.0
(22) Anmeldetag: 22.09.1992
(51) Int. Cl.: C01G 43/025

(54) **Verfahren zum Herstellen von UO2-oder U/PuO2-Pulver**
Process for the preparation of UO2 or U/PO2 powder
Procédé de preparation de pouche de UO2 ou de U/PUO2

(43) Veröffentlichungstag der Anmeldung: 30.03.1994
(73) Patentinhaber: SIEMENS AKTIENGESELLSCHAFT, D-80333 München (DE)
(72) Erfinder: Brähler, Georg, W-6463 Freigericht (DE); Wittmann, Kurt, W-6455 Erlensee (DE)

(56) Entgegenhaltungen:
- DE-A- 3 200 518
- DE-A- 3 506 111
- DATABASE WPI Week 7339, Derwent Publications Ltd., London, GB; AN 73-56469U
- NUCLEAR TECHNOLOGY, Band 81, Nr. 3, Juni 1988; HAAS, Seiten 393-406

## Beschreibung

Es ist bekannt, sinterfähiges UO₂ bzw. U/PuO₂ in Pulverform zu Preßkörpern zu pressen und aus diesen Preßkörpern Sinterkörper herzustellen. Diese Sinterkörper werden als Kernbrennstoff in die Hüllrohre von Brennstäben eingefüllt. Die Brennstäbe werden zu Kernreaktorbrennelementen zusammengefaßt. Diese Kernreaktorbrennelemente werden schließlich im Reaktorkern eines in der Regel leichtwassermoderierten Kernreaktors angeordnet.

Es ist auch bereits üblich, sinterfähiges UO₂ durch Erhitzen von Ammonium-Uranyl-Carbonat zu gewinnen. Dieses Ammonium-Uranyl-Carbonat wird aus einer wässrigen Ammoniumcarbonatlösung ausgefällt, in die gasförmiges Uranhexafluorid eingeleitet wird. Als weiteres Reaktionsprodukt entsteht hierbei Ammoniumfluorid.

Ferner ist bereits üblich, Uranoxid wie z.B. UO₂, U₃O₈ und UO₃ zu Ammonium-Uranyl-Carbonat umzuwandeln und aus diesem Ammonium-Uranyl-Carbonat durch Erhitzen sinterfähiges UO₂-Pulver zu gewinnen. Auch in diesem Fall wird das Ammonium-Uranyl-Carbonat in einer wässrigen Ammoniumcarbonatlösung ausgefällt. Dieser wässrigen Ammoniumcarbonatlösung wird zu diesem Zweck eine wässrige Uranylnitratlösung zugesetzt, so daß als Nebenprodukt Ammoniumnitrat entsteht. Die wässrige Uranylnitratlösung wiederum wird durch Auflösen des betreffenden Uranoxids in Salpetersäure gewonnen. Hierbei ergeben sich als Nebenprodukt nitrose Gase (NOₓ).

Diese nitrosen Gase sind giftig und können daher nicht in die Atmosphäre abgegeben werden, sondern sie müssen in unschädliche Stoffe wie z.B. Stickstoff, Wasser oder Salpetersäure umgesetzt werden.

Das beim Ausfällen des Ammonium-Uranyl-Carbonats aus der wässrigen Ammoniumcarbonatlösung als Nebenprodukt anfallende Ammoniumnitrat ist explosiv und erfordert daher entsprechende Sicherheitsvorkehrungen. Es kann zwar zu Kunstdünger weiterverarbeitet werden. Auch ist seine thermische Zersetzung zu Stickstoff und Wasser möglich. Letzteres ist aber besonders aufwendig und kostenintensiv. Die Weiterverarbeitung zu Kunstdünger erfordert eine vollständige Dekontamination der verwendeten Ammoniumnitratlösung, die ebenfalls mit erheblichen Kosten verbunden ist.

Patentanspruch 1 gibt ein zum Herstellen von UO₂- oder U/PuO₂-Pulver bestimmtes Verfahren an, das sowohl nitrose Gase als auch Ammoniumnitrat als Nebenprodukte vermeidet und daher besonders kostengünstig ist. Dieses Verfahren geht von der Erkenntnis aus, daß Ammonium-Uranyl-Carbonat bzw. Ammonium-Uranyl-Plutonyl-Carbonat auch aus einer wässrigen Ammoniumcarbonatlösung oder Ammoniumhydrogencarbonatlösung ausgefällt werden kann, der Ausgangsoxid aus der Gruppe Uranoxid, Plutoniumoxid und Uran-Plutonium-Mischoxid direkt zugesetzt wird. Trotzdem kann aus dem ausgefällten Ammonium-Uranyl-Carbonat bzw. Ammonium-Uranyl-Plutonylcarbonat durch Erhitzen sinterfähiges UO₂-Pulver bzw. U/PuO₂-Mischoxidpulver hergestellt werden.

Das Behandeln des betreffenden Ausgangsoxids braucht aber nicht nur Ausfällen des Ammonium-Uranyl-Carbonats bzw. Ammonium-Uranyl-Plutonyl-Carbonats aus der wässrigen Ammoniumcarbonat- bzw. Ammoniumhydrogencarbonatlösung z.B. durch Übersättigen dieser Lösung mit Ammoniumcarbonat bzw. -hydrogencarbonat oder durch Abkühlen der Lösung zu sein, sondern dieses Behandeln kann auch Digerieren des Ausgangsoxids mit der wässrigen Ammoniumcarbonat- bzw. Ammoniumhydrogencarbonatlösung sein. Hierbei wird das betreffende feste, aber pulverförmige Ausgangsoxid mit so wenig konzentrierter wässriger Ammoniucarbonat- bzw. Ammoniumhydrogencarbonatlösung innig vermischt, daß das Löslichkeitsprodukt von Ammonium-Uranyl-Carbonat bzw. Ammonium-Uranyl-Plutonyl-Carbonat ständig überschritten ist. Hierbei bleibt das feste Ausgangsoxid weitgehend ungelöst und wird praktisch im festen Zustand unmittelbar in Ammonium-Uranyl-Carbonat bzw. Ammonium-Uranyl-Plutonyl-Carbonat umgesetzt.

Die vom Ammonium-Uranyl-Carbonat bzw. Ammonium-Uranyl-Plutonyl-Carbonat abgetrennte Mutterlauge besteht aus wässriger Ammoniumcarbonatlösung bzw. Ammoniumhydrogencarbonatlösung und kann zum Auflösen von Ausgangsoxid wieder verwendet werden.

Die Erfindung und ihre Vorteile seien an Ausführungsbeispielen entsprechend der folgenden Tabelle näher erläutert:

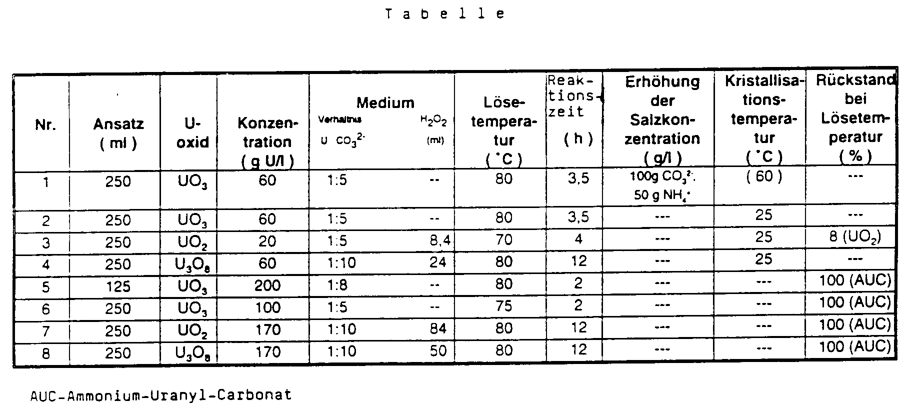

Die Tabelle bezieht sich auf das Behandeln des betreffenden Uranoxids sowohl mit einer wässrigen Ammoniumcarbonatlösung als auch mit einer wässrigen Ammoniumhydrogencarbonatlösung als auch mit einem Gemisch aus diesen beiden Lösungen. Das Verhältnis von Uran- zu Carbonationen der verwendeten wässrigen Lösung ist unter der Spalte "Medium" angegeben.

Beim Ausführungsbeispiel 1 nach der Tabelle wird das Ausfällen des Ammonium-Uranyl-Carbonats durch Erhöhen der Salzkonzentration in der wässrigen Lösung um 100g Carbonationen und 50g Ammoniumionen erzielt. Bei den Ausführungsbeispielen 2 bis 4 wird das Ausfällen des Ammonium-Uranyl-Carbonats durch Absenken der Temperatur der Lösung auf 25 °C bewirkt. Bei allen Ausführungsbeispielen wird das gebildete Ammonium-Uranyl-Carbonat abfiltriert. Die Ausführungsbeispiele 5 bis 8 beziehen sich auf das Digerieren des betreffenden Uranoxids mit der wässrigen Lösung.

Bei den Ausführungsbeispielen 3 und 4 sowie 7 und 8 wurde der Lösung noch H₂O₂ als Oxidationsmittel für das betreffende Uranoxid zugesetzt. Hierdurch wird die Umsetzung des betreffenden Uranoxids zu Ammonium-Uranyl-Carbonat beschleunigt.

Günstigerweise wird das erfindungsgemäße Verfahren zum Herstellen von sinterfähigem UO₂-Pulver aus Uranmetall verwendet, dessen Anreicherung mit dem spaltbaren Isotop U-235 durch Einstrahlung von Laserlicht in einem Magnetfeld oder einem elektrischen Feld vergrößert wird. Ein solches angereichertes Uranmetall kann besonders günstig zu UO₃ oxidiert und als UO₃ ohne Oxidationsmittel mit der wässrigen Lösung behandelt werden.

Gut geeignet ist das erfindungsgemäße Verfahren auch zum Rückführen von Sinterschrott, der beim Herstellen von Sinterkörpern anfallen kann und wohl aus gesintertem UO₂ besteht, in der Regel aber vor dem Behandeln mit der wässrigen Lösung zu U₃O₈ geglüht wird.

Das nach den Ausführungsbeispielen der Tabelle gewonnene Ammonium-Uranyl-Carbonat wird durch Kalzinieren, d.h. Erhitzen in einem Gemisch aus Wasserdampf und Wasserstoff zu einem sinterfähigen UO₂-Pulver umgewandelt.

In den Ausführungsbeispielen nach der Tabelle entsprechender Weise kann auch mit U/Pu-Mischoxid als Ausgangsoxid zum Gewinnen von sinterfähigem U/PuO₂-Mischoxidpulver verfahren werden.

Dieses sinterfähige UO₂- bzw. U/PuO₂-Pulver kann zu Preßkörpern gepreßt werden. Die Preßkörper werden schließlich zu Sinterkörpern für Brennstäbe gesintert.

## Patentansprüche

1. Verfahren zum Herstellen von UO₂- oder U/PuO₂-Pulver durch Erhitzen, insbesondere durch Kalzinieren von Ammonium-Uranyl-Carbonat bzw. Ammonium-Uranyl-Plutonyl-Carbonat, das durch Behandeln von Ausgangsoxid aus der Gruppe Uranoxid, Plutoniumoxid und Uranplutoniummischoxid mit mindestens einer Lösung aus der Gruppe wässrige Ammoniumcarbonatlösung und wässrige Ammoniumhydrogencarbonatlösung gewonnen wird.

2. Verfahren nach Anspruch 1,
**dadurch gekennzeichnet,** daß das Ausgangsoxid in der Lösung aufgelöst und das Ammonium-Uranyl-Carbonat bzw. das Ammonium-Uranyl-Plutonyl-Carbonat aus der Lösung ausgefällt und abfiltriert wird.

3. Verfahren nach Anspruch 1,
**dadurch gekennzeichnet,** daß das Ammonium-Uranyl-Carbonat bzw. das Ammonium-Uranyl-Plutonyl-Carbonat durch Digerieren des Ausgangsoxids mit der Lösung gewonnen wird.

4. Verfahren nach einem der Ansprüche 1 bis 3,
**dadurch gekennzeichnet,** daß die Anreicherung von Uranmetall an U-235 durch Einstrahlung von Laserlicht vergrößert und daß anschließend dieses Uranmetall zum Ausgangsuranoxid oxidiert wird.

5. Verfahren nach einem der Ansprüche 1 bis 3,
**dadurch gekennzeichnet,** daß als Ausgangsoxid Sinterschrott mit der wässrigen Ammoniumcarbonat- bzw. Ammoniumhydrogencarbonatlösung behandelt wird.

6. Verfahren nach einem der Ansprüche 1 bis 5,
**dadurch gekennzeichnet,** daß durch Erhitzen des Ammonium-Uranyl-Carbonats bzw. des Ammonium-Uranyl-Plutonyl-Carbonats gewonnene UO₂- bzw. U/PuO₂-Pulver zu Preßkörpern gepreßt und diese zu Sinterkörpern gesintert werden.

7. Verfahren nach Anspruch 1,
**dadurch gekennzeichnet,** daß der Lösung ein Oxydationsmittel für das Ausgangsoxid zugesetzt wird.

## Claims

1. Method for producing UO₂ or U/PuO₂ powder by heating, in particular by calcining ammonium uranyl carbonate or ammonium uranyl plutonyl carbonate which is obtained by treating a starting oxide selected from the group consisting of uranium oxide, plutonium oxide and uranium plutonium mixed oxide, with at least one solution selected from the group consisting of aqueous ammonium carbonate solution and aqueous ammonium hydrogen carbonate solution.

2. Method according to claim 1, characterised in that the starting oxide is dissolved in the solution and the ammonium uranyl carbonate or the ammonium uranyl plutonyl carbonate is precipitated out of the solution and filtered out.

3. Method according to claim 1, characterised in that the ammonium uranyl carbonate or the ammonium uranyl plutonyl carbonate is obtained by digestion of the starting oxide with the solution.

4. Method according to one of claims 1 to 3, characterised in that an enrichment of uranium metal is increased to U-235 by shining in laser light, and then oxidizing the uranium metal into the starting uranium oxide.

5. Method according to one of claims 1 to 3, characterised in that sintered scrap is treated as a starting oxide with the aqueous ammonium carbonate or ammonium hydrogen carbonate solution.

6. Method according to one of claims 1 to 5, characterised in that the UO₂ or U/PuO₂ powder obtained by heating the ammonium uranyl carbonate or ammonium uranyl plutonyl carbonate is compressed into green compacts, and the green compacts are sintered into sintered compacts.

7. Method according to claim 1, characterised in that an oxidation agent for the starting oxide is added to the solution.

## Revendications

1. Procédé pour fabriquer une poudre de UO₂ ou de U/PuO₂ par chauffage, notamment par calcination de carbonate d'uranyle d'ammonium ou de carbonate d'uranyle-plutonyle d'ammonium, que l'on obtient par traitement d'un oxyde de départ tiré du groupe oxyde d'uranium, oxyde de plutonium et oxyde mixte d'uranium et de plutonium, à l'aide d'au moins une solution tirée du groupe comprenant une solution aqueuse de carbonate d'ammonium et une solution aqueuse de bicarbonate d'ammonium.

2. Procédé suivant la revendication 1, caractérisé par le fait qu'on dissout l'oxyde de départ dans la solution et que le carbonate d'uranyle d'ammonium ou le carbonate d'uranyle et de plutonyle d'ammonium se dépose à partir de la solution et est séparé par filtrage.

3. Procédé suivant la revendication 1, caractérisé par le fait qu'on obtient le carbonate d'uranyle d'ammonium ou le carbonate d'uranyle et de plutonyle d'ammonium par digestion de l'oxyde de départ par la solution.

4. Procédé suivant l'une des revendications 1 à 3, caractérisé par le fait qu'on augmente l'enrichissement en U-235 de l'uranium métallique par irradiation par une lumière laser et qu'on oxyde ensuite cet uranium métallique pour former l'oxyde d'uranium de départ.

5. Procédé suivant l'une des revendications 1 à 3, caractérisé par le fait qu'on traite, comme oxyde de départ, des déchets frittés avec une solution aqueuse de carbonate d'ammonium ou de bicarbonate d'ammonium.

6. Procédé suivant l'une des revendications 1 à 5, caractérisé par le fait que l'on presse ou moule la poudre de UO₂ ou la poudre de U/PuO₂ obtenue par chauffage du carbonate d'uranyle d'ammonium ou du carbonate d'uranyle et de plutonyle d'ammonium, pour former des corps moulés et qu'on fritte ces derniers pour obtenir des corps frittés.

7. Procédé suivant la revendication 1, caractérisé par le fait qu'on ajoute à la solution un agent oxydant pour l'oxyde de départ.
